# EUROPEAN PATENT APPLICATION

(11) **EP 4 826 317 A1**
(43) Date of publication of application: **21.10.2026**
(21) Application number: 24917382.4
(22) Date of filing: 29.04.2024
(51) Int. Cl.: F25D 23/02, F25D 23/04, A47J 31/36, A47J 31/06, A47J 31/44

(54) **REFRIGERATOR**

(30) Priority: 08.01.2024 KR 20240002767
(71) Applicant: LG Electronics Inc., Yeongdeungpo-gu Seoul 07336 (KR)
(72) Inventor: PARK, Hyun Woo, Seoul 08592 (KR); LIM, Hyoung Keun, Seoul 08592 (KR); LEE, Jaeduck, Seoul 08592 (KR)
(74) Representative: Vossius & Partner Patentanwälte Rechtsanwälte mbB
(86) International application number: PCT/KR2024/005766
(87) International publication number: WO 2025/150621

(57) **Abstract**

The present invention provides a refrigerator in which a placement module is provided, the placement module comprising a placement tray, in a door, on which a beverage capsule is placed, and
a tray accommodation part in which the placement tray is accommodated, the refrigerator comprising a beverage extraction module which automatically perforates a capsule placed on the placement tray and injects drinking water into the capsule in order to extract the beverage of the capsule. Accordingly, a beverage in a capsule can be extracted and provided in the refrigerator.

## Description

The present disclosure relates to a refrigerator capable of extracting a capsule beverage.

In general, a refrigerator is a home appliance provided to store various foods or beverages for a long period of time by using cold air generated by circulation of a refrigerant according to a refrigeration cycle.

Recently, refrigerators have been configured to have various functions in addition to a function of simply storing items at a low temperature. For example, by providing a dispenser configured to purify and provide water in a refrigerator, the refrigerator may also perform a function of a water purifier.

The dispenser may be provided in a door of the refrigerator. Accordingly, a user may easily receive purified water through the dispenser without taking out water, such as bottled water, stored in the refrigerator.

Refrigerators having such dispensers are variously disclosed in Korean Patent Application Publication No. 10-2005-0004927, Korean Patent Application Publication No. 10-2004-0078299, Korean Patent Application Publication No. 10-2011-0060091, Korean Patent Application Publication No. 10-2011-0084789, Korean Patent No. 10-0590498, and the like.

In addition, recently, a function capable of extracting coffee has been additionally provided to the refrigerator having the dispenser, so that the refrigerator can be utilized more variously.

This is disclosed in Korean Patent Application Publication No. 10-2005-0033290 (Prior Art 1), U.S. Patent No. 8,434,401 B2 (Prior Art 2), and the like.

In the case of Prior Art 1, ground coffee contained in a filter is extracted by using hot water. However, a device disclosed in Prior Art 1 cannot extract capsule coffee, and thus has low usability.

In the case of Prior Art 2, a beverage in a pod is extracted by mounting the pod at an outlet of the dispenser and then supplying hot water. However, because a device disclosed in Prior Art 2 does not have a structure for extracting a capsule beverage by using high-pressure hot water, the device has low usability. Moreover, since the pod must be coupled to an interface manually or by using a handle, the pod is inconvenient to use.

In addition, in the case of Prior Art 2, when purified water is to be provided, the pod must be separated again and another pod for receiving purified water must be installed, and thus the device disclosed in Prior Art 2 is inconvenient to use.

Meanwhile, in the case of Korean Patent No. 10-1555543 (Prior Art 3), a function of extracting capsule coffee is provided in a water purifier. However, in a device disclosed in Prior Art 3, a structure for extracting capsule coffee is not modularized for each component, and thus an overall structure is complicated and it is impossible to selectively provide only a necessary module.

An objective of the present disclosure is to provide a refrigerator to which a seating module for mounting a capsule and a beverage extraction module for perforating and fixing the mounted capsule are applied so that a capsule beverage can be extracted and supplied.

An objective of the present disclosure is to provide a refrigerator to which a new type of capsule beverage extraction module is applied so that fixing of a capsule and extraction of a capsule beverage can be automatically performed only by supplying the capsule.

An objective of the present disclosure is to allow structures for extracting a capsule beverage to be provided as separate modules so that the structures can be selectively provided to an existing refrigerator without a capsule beverage extraction function.

An objective of the present disclosure is to allow a function of extracting a capsule beverage to be selectively provided for each model of a refrigerator.

According to a refrigerator of the present disclosure, a beverage extraction module for extracting a capsule beverage may be provided in a door.

According to the refrigerator of the present disclosure, a seating module for allowing a capsule beverage to be placed at a correct position may be provided in the door.

According to the refrigerator of the present disclosure, the seating module may be provided with an accommodation recess in which a capsule filled with a liquid beverage or a powdered beverage is accommodated.

According to the refrigerator of the present disclosure, the capsule may be provided in the accommodation recess of a tray accommodation part in a state of being seated on a seating tray.

According to the refrigerator of the present disclosure, a hot water supply module for generating high-temperature drinking water for extracting a capsule beverage may be provided.

According to the refrigerator of the present disclosure, the hot water supply module may supply drinking water at a high pressure so that the capsule beverage can be extracted.

According to the refrigerator of the present disclosure, the hot water supply module may be provided in at least one of the door and a cabinet.

According to the refrigerator of the present disclosure, the hot water supply module may receive drinking water from a raw water line, heat the received drinking water, and supply the heated drinking water to a supply tube.

According to the refrigerator of the present disclosure, the beverage extraction module may automatically perforate the capsule seated on the seating tray and inject water into the capsule to extract a beverage.

According to the refrigerator of the present disclosure, the beverage extracted from the beverage extraction module may be discharged through a dispensing nozzle of a dispenser part.

According to the refrigerator of the present disclosure, the beverage extraction module may be configured to grip the capsule.

According to the refrigerator of the present disclosure, the beverage extraction module may automatically grip the capsule.

According to the refrigerator of the present disclosure, the beverage extraction module may extract a beverage by supplying heated drinking water to the capsule.

According to the refrigerator of the present disclosure, the beverage extracted by the beverage extraction module may be provided to the dispensing nozzle of the dispenser part.

According to the refrigerator of the present disclosure, a beverage extracted from the beverage extraction module or drinking water flowing along the raw water line may be selectively discharged through the dispensing nozzle of the dispenser part.

According to the refrigerator of the present disclosure, the seating tray may be detachably installed in the door.

According to the refrigerator of the present disclosure, the seating tray may be installed to be accommodated in or withdrawn from the accommodation recess.

According to the refrigerator of the present disclosure, a seating recess may be formed in the seating tray so that a capsule filled with a beverage is seated therein.

According to the refrigerator of the present disclosure, the seating tray may be mounted in the accommodation recess in a drawer-type manner.

According to the refrigerator of the present disclosure, guide grooves may be formed to be recessed in opposite side walls inside the accommodation recess, and guide protrusions accommodated in the guide grooves and guided for movement may be formed on opposite side surfaces of the seating tray.

According to the refrigerator of the present disclosure, the seating tray may be placed at a correct position in the accommodation recess by using magnetic members.

According to the refrigerator of the present disclosure, the magnetic members may be respectively provided on facing surfaces between the guide protrusions of the seating tray and the guide grooves of the accommodation recess.

According to the refrigerator of the present disclosure, a support may be provided inside the seating recess formed in the seating tray so that the capsule can be seated.

According to the refrigerator of the present disclosure, a rupture protrusion may be formed to protrude from the support in order to rupture a film of the capsule.

According to the refrigerator of the present disclosure, multiple extraction holes may be formed by penetrating the support so that an extracted beverage flowing out from within the capsule can flow down.

According to the refrigerator of the present disclosure, the support may be installed so as not to rotate inside the seating recess.

According to the refrigerator of the present disclosure, at least a portion of an inner surface of the seating recess and an outer surface of the support may be formed as a flat surface in order to prevent rotation of the support.

According to the refrigerator of the present disclosure, a discharge tube for discharging an extracted beverage flowing down into the seating recess may be formed to protrude from a lower surface of the seating tray.

According to the refrigerator of the present disclosure, an inner bottom surface of the seating recess may be formed to be inclined up to a portion extending to the discharge tube so that the extracted beverage can smoothly flow down to the discharge tube.

According to the refrigerator of the present disclosure, the discharge tube may be formed to be bent toward an inner wall surface of the accommodation recess.

According to the refrigerator of the present disclosure, a guide part coupled to the discharge tube and configured to guide discharge of the extracted beverage may be provided in the accommodation recess.

According to the refrigerator of the present disclosure, the guide part provided in the accommodation recess may include an insertion groove into which the discharge tube is inserted and coupled.

According to the refrigerator of the present disclosure, the insertion groove of the guide part may have a flow path through which the extracted beverage can pass.

According to the refrigerator of the present disclosure, the insertion groove of the guide part may be formed in the inner wall surface of the accommodation recess.

According to the refrigerator of the present disclosure, a discharge pipe through which the extracted beverage discharged into the insertion groove is discharged may be formed in the accommodation recess.

According to the refrigerator of the present disclosure, the discharge pipe of the guide part may protrude from an outer wall surface of the accommodation recess.

According to the refrigerator of the present disclosure, a connection tube connecting the discharge pipe of the guide part and the dispensing nozzle of the dispenser part may be included.

According to the refrigerator of the present disclosure, an installation space formed in a door body may be closed by a front panel.

According to the refrigerator of the present disclosure, the beverage extraction module may be provided in the installation space formed in the door body.

According to the refrigerator of the present disclosure, the hot water supply module may be mounted in a mounting recess formed in one surface of the door body.

According to the refrigerator of the present disclosure, the beverage extraction module may include a gripping cap that surrounds and grips an outer surface of the capsule seated in the seating tray.

According to the refrigerator of the present disclosure, the beverage extraction module may include the gripping cap that perforates the outer surface of the capsule seated in the seating tray.

According to the refrigerator of the present disclosure, a perforation protrusion may be formed on an inner surface of the gripping cap so as to perforate the outer surface of the capsule.

According to the refrigerator of the present disclosure, a capsule receiving recess may be formed in the gripping cap so as to surround the outer surface of the capsule.

According to the refrigerator of the present disclosure, an inlet pipe to which the supply tube is connected may be formed to protrude from an outer surface of the gripping cap.

According to the refrigerator of the present disclosure, the gripping cap may be installed to move up and down.

According to the refrigerator of the present disclosure, the perforation protrusion formed in the gripping cap may be formed to protrude downward from an upper inner surface of the capsule receiving recess.

According to the refrigerator of the present disclosure, the beverage extraction module may include an elevating part configured to move the gripping cap up and down.

According to the refrigerator of the present disclosure, the elevating part may include a pressing bar connected to an upper surface of the gripping cap.

According to the refrigerator of the present disclosure, the elevating part may include a rack member configured to move the pressing bar up and down.

According to the refrigerator of the present disclosure, the elevating part may include a driving source configured to provide a driving force for moving the rack member up and down.

According to the refrigerator of the present disclosure, the beverage extraction module may include a module cover that accommodates the rack member of the elevating part and guides the up-and-down movement of the rack member.

According to the refrigerator of the present disclosure, the module cover may be fixedly installed in the installation space of the door.

According to the refrigerator of the present disclosure, all of the seating module, the beverage extraction module, and the hot water supply module may be included.

According to the refrigerator of the present disclosure, at least one module among the seating module, the beverage extraction module, and the hot water supply module may be replaced with a replaceable device provided in the refrigerator.

According to the refrigerator of the present disclosure, a user needs only to perform a simple operation of seating a capsule in the seating tray and mounting the seating tray in the accommodation recess provided in the door, thereby allowing a beverage in the capsule to be automatically extracted.

In addition, according to the refrigerator of the present disclosure, the hot water supply module for heating drinking water, the seating module for seating the capsule, and the beverage extraction module for gripping and perforating the capsule may each be provided as a single module, thereby allowing the modules to be applied to an existing refrigerator.

In addition, according to the refrigerator of the present disclosure, in the process of mounting the seating tray in the accommodation recess of the door, the discharge tube of the seating tray may be coupled to the insertion groove of the guide part provided in the accommodation recess, thereby allowing an extracted beverage to be accurately guided to the dispensing nozzle through the connection tube.

### BRIEF DESCRIPTION OF THE DRAWINGS

FIG. 1 is an exterior perspective view of a refrigerator according to an embodiment of the present disclosure.
FIG. 2 is a perspective view of a door of the refrigerator according to an embodiment of the present disclosure.
FIG. 3 is an exploded perspective view of the door of the refrigerator according to an embodiment of the present disclosure.
FIG. 4 is a cross-sectional view illustrating an inside of the door of the refrigerator according to an embodiment of the present disclosure.
FIG. 5 is a front view illustrating an installed state of a seating module and a beverage extraction module of the refrigerator according to an embodiment of the present disclosure.
FIG. 6 is a perspective view of a hot water supply module of the refrigerator according to an embodiment of the present disclosure.
FIG. 7 is a plan view of the hot water supply module of the refrigerator according to an embodiment of the present disclosure.
FIG. 8 is a view illustrating another example of the hot water supply module of the refrigerator according to an embodiment of the present disclosure.
FIG. 9 is a view illustrating still another example of the hot water supply module of the refrigerator according to an embodiment of the present disclosure.
FIG. 10 is a circuit diagram of the hot water supply module of the refrigerator according to an embodiment of the present disclosure.
FIG. 11 is a perspective view illustrating a relationship between an accommodation recess of the seating module and an installation casing in which the beverage extraction module is installed, the seating module and the beverage extraction module of the refrigerator according to an embodiment of the present disclosure.

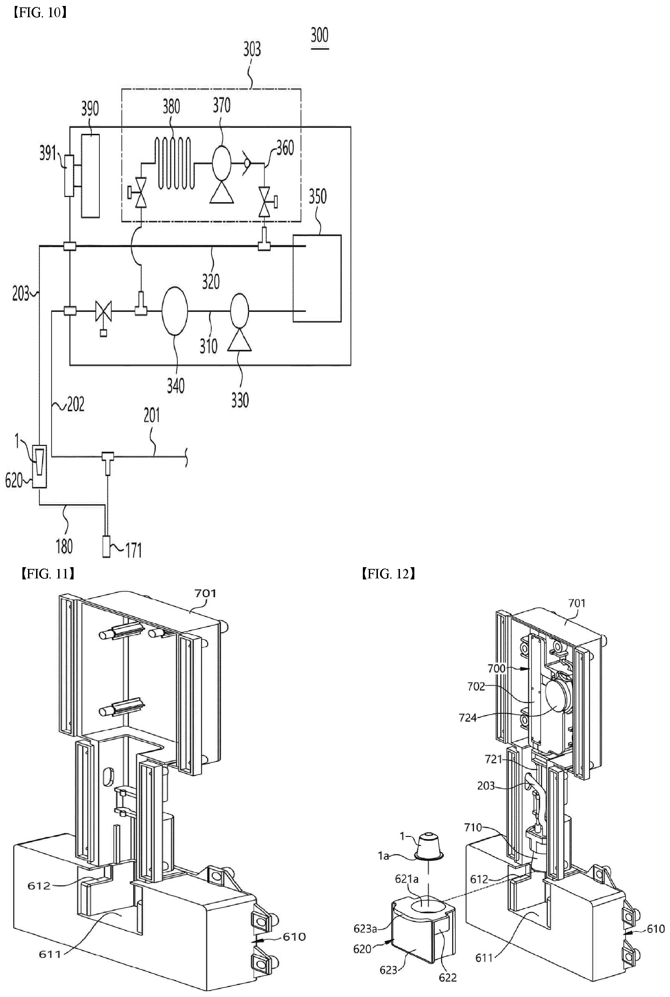

FIG. 11 is a perspective view illustrating an installed state of the seating module and the beverage extraction module of the refrigerator according to an embodiment of the present disclosure.
FIG. 12 is a perspective view illustrating a state in which a seating tray is separated from a tray accommodation part of the seating module of the refrigerator according to an embodiment of the present disclosure.

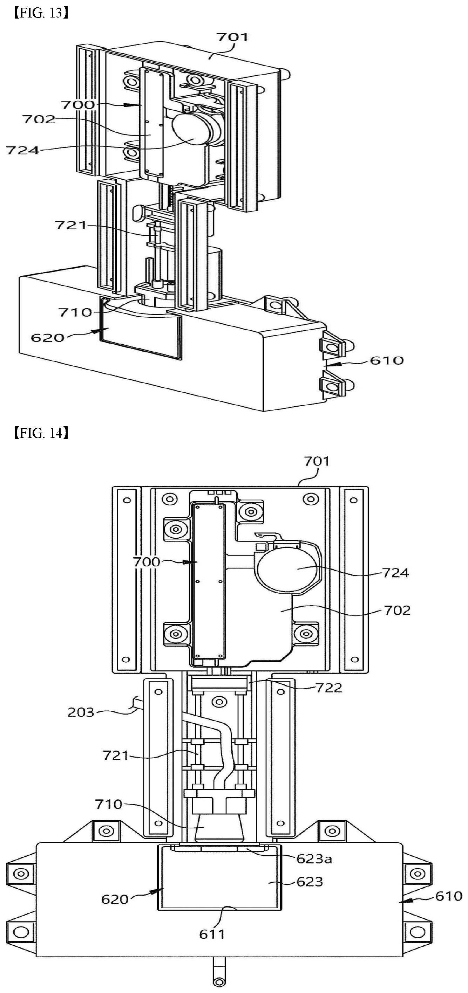

FIG. 13 is a perspective view illustrating a state in which the seating tray is mounted in the tray accommodation part of the seating module of the refrigerator according to an embodiment of the present disclosure.
FIG. 14 is a front view illustrating a state in which the seating tray is mounted in the tray accommodation part of the seating module of the refrigerator according to an embodiment of the present disclosure.

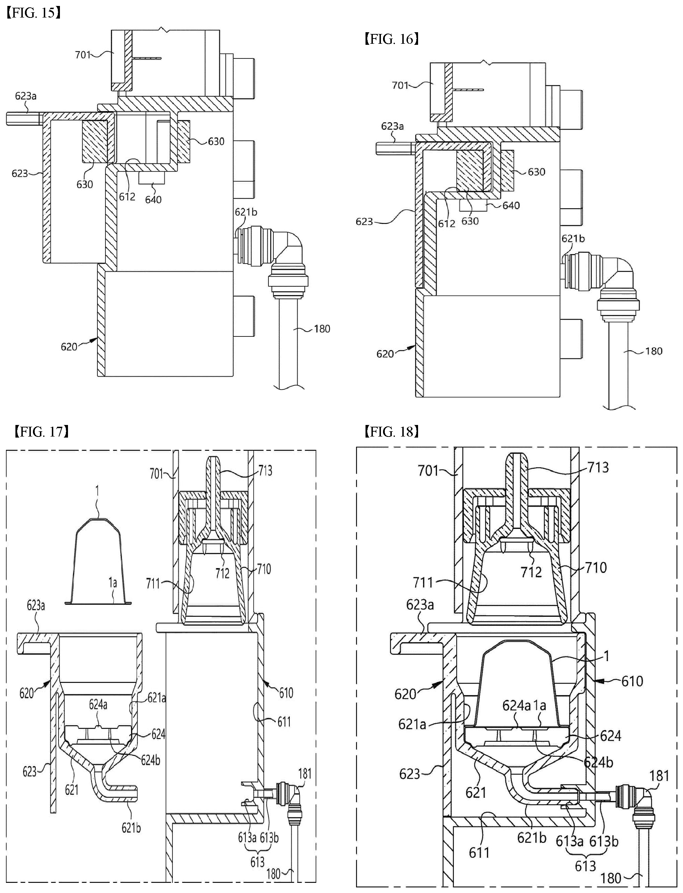

FIG. 15 is a cross-sectional view of a main portion illustrating a relationship between guide grooves and guide protrusions in a state before the seating tray is mounted in the tray accommodation part of the seating module of the refrigerator according to an embodiment of the present disclosure.
FIG. 16 is a cross-sectional view of a main portion illustrating the relationship between the guide grooves and the guide protrusions in a state in which the seating tray is mounted in the tray accommodation part of the seating module of the refrigerator according to an embodiment of the present disclosure.
FIG. 17 is a cross-sectional view of a main portion illustrating a relationship between a discharge tube and a guide part in a state before the seating tray is mounted in the tray accommodation part of the seating module of the refrigerator according to an embodiment of the present disclosure.
FIG. 18 is a cross-sectional view of a main portion illustrating a relationship between the discharge tube and the guide part in a state in which the seating tray is mounted in the tray accommodation part of the seating module of the refrigerator according to an embodiment of the present disclosure.

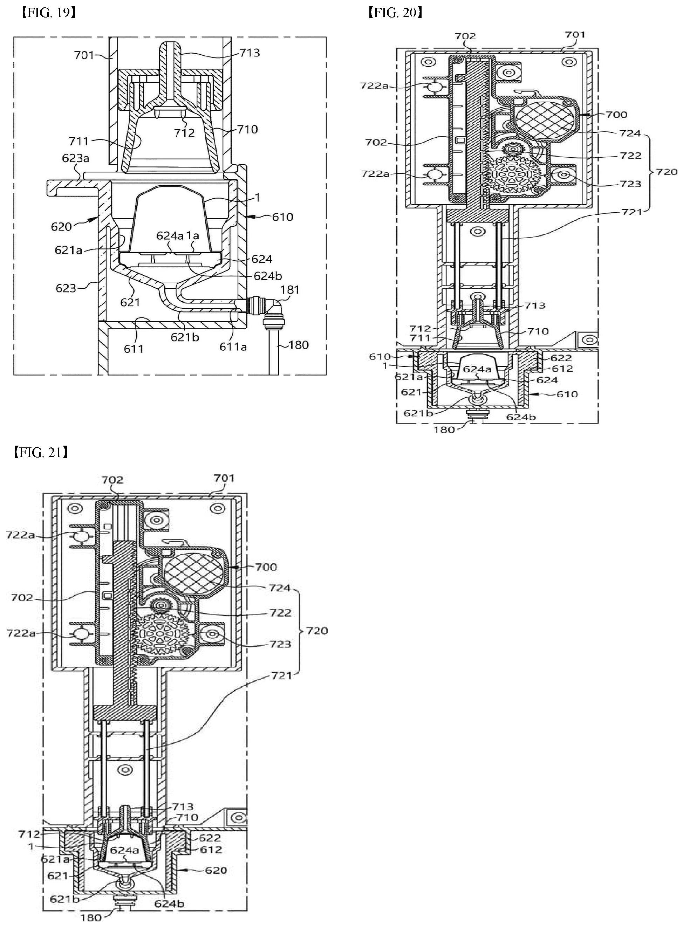

FIG. 19 is a cross-sectional view of a main portion illustrating another example of a relationship between the discharge tube and the guide part of the seating module of the refrigerator according to an embodiment of the present disclosure.
FIG. 20 is a front cross-sectional view illustrating a state before a gripping cap of the beverage extraction module of the refrigerator according to an embodiment of the present disclosure grips a capsule.
FIG. 21 is a front cross-sectional view illustrating a state in which the gripping cap of the beverage extraction module of the refrigerator according to an embodiment of the present disclosure grips and perforates the capsule.

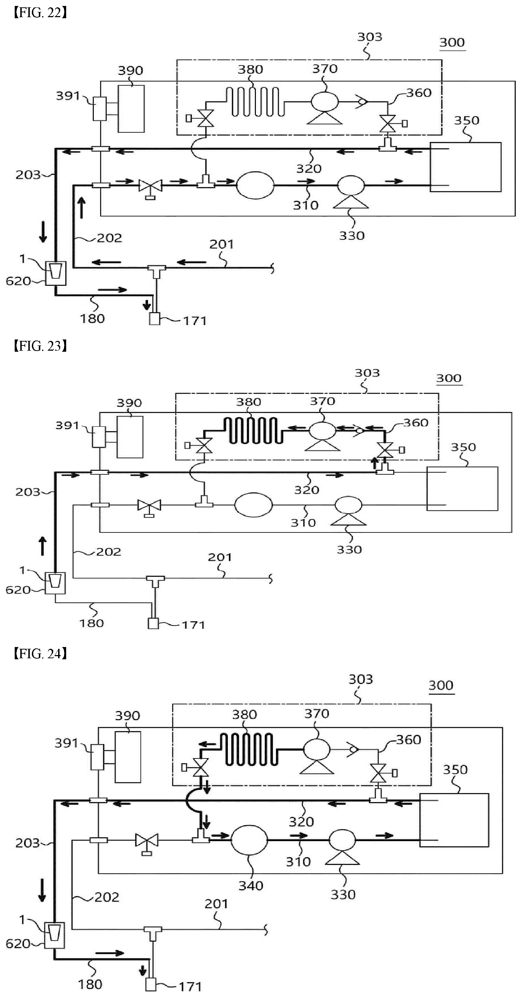

FIG. 22 is a circuit diagram illustrating a process in which the hot water supply module of the refrigerator according to an embodiment of the present disclosure heats drinking water.
FIG. 23 is a circuit diagram illustrating a process in which the hot water supply module of the refrigerator according to an embodiment of the present disclosure recovers drinking water.
FIG. 24 is a circuit diagram illustrating a process in which the hot water supply module of the refrigerator according to an embodiment of the present disclosure reheats and supplies drinking water in a state in which the drinking water is recovered.

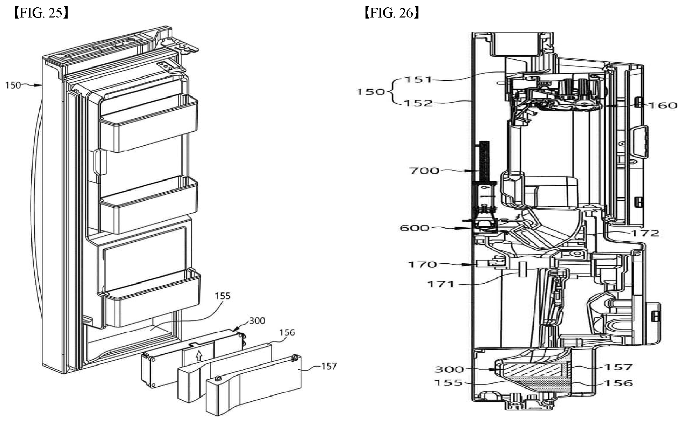

FIG. 25 is an exploded perspective view illustrating another example of an installation position of the hot water supply module in the refrigerator according to an embodiment of the present disclosure.
FIG. 26 is a cross-sectional view illustrating an assembled state of the hot water supply module in still another example of an installation position of the hot water supply module in the refrigerator according to an embodiment of the present disclosure.

### DETAILED DESCRIPTION

Prior to describing embodiments of the present disclosure, when adding reference numerals to components in each drawing, it should be noted that identical components are given the same reference numerals as much as possible even if they are shown in different drawings.

In addition, when describing the embodiments of the present disclosure, if a detailed description of the relevant known configuration or function is judged to hinder understanding of the embodiments of the present disclosure, detailed descriptions thereof will be omitted.

In addition, in describing the components of the embodiments of the present disclosure, terms such as first, second, A, B, (a), and (b) may be used. These terms are only for distinguishing the components from other components, and the nature or order of the components is not limited by the terms. When a component is described as being "connected" or "coupled" to another component, the component may be directly connected to or coupled to the another component, but it should be understood that still another component may be "connected" or "coupled" thereto between each component.

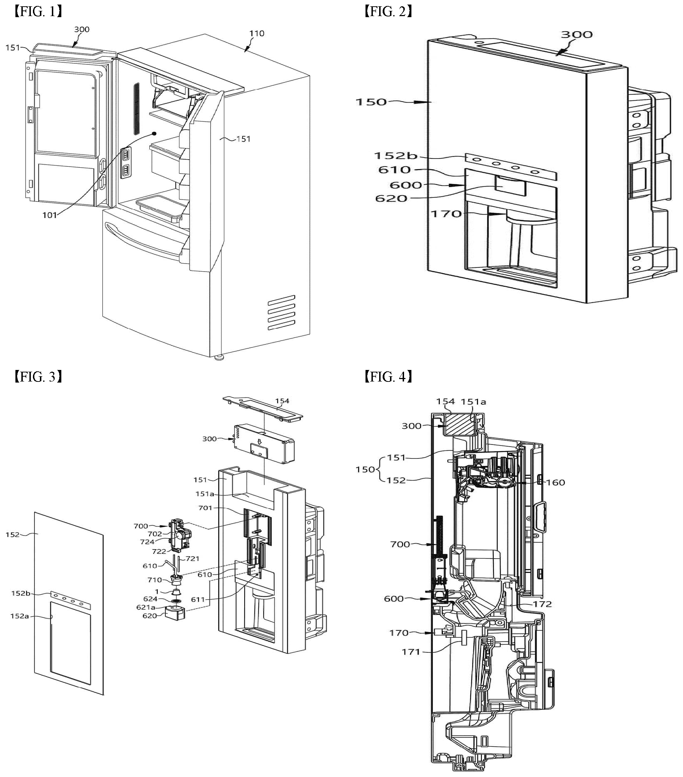

Hereinafter, preferred embodiments of a hot water kit of the present disclosure and a refrigerator having the hot water kit will be described with reference to FIGS. 1 to 26.

FIG. 1 is an exterior perspective view of a refrigerator according to an embodiment of the present disclosure, FIG. 2 is a perspective view of a door of the refrigerator according to an embodiment of the present disclosure, and FIG. 3 is an exploded perspective view of the door of the refrigerator according to an embodiment of the present disclosure.

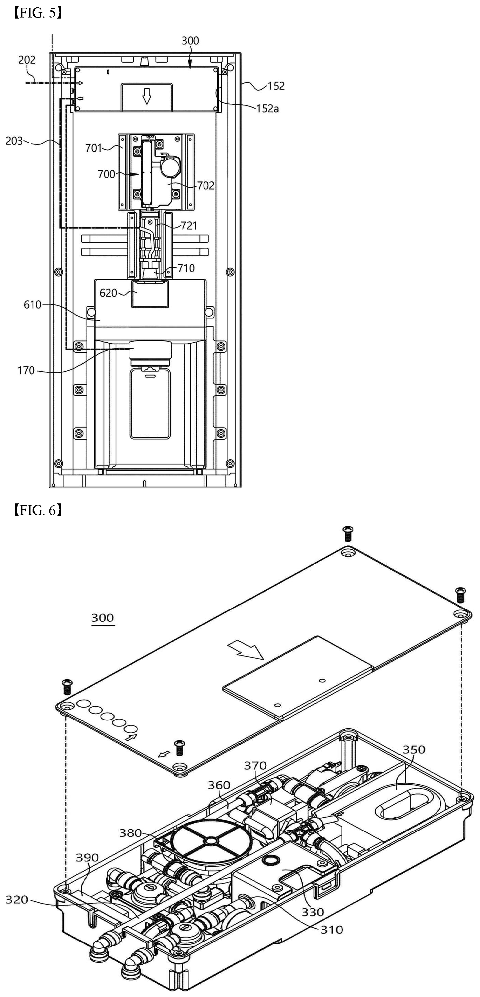

In addition, FIG. 4 is a cross-sectional view illustrating an inside of the door of the refrigerator according to an embodiment of the present disclosure, and FIG. 5 is a front view illustrating an installed state of a seating module and a beverage extraction module of the refrigerator according to an embodiment of the present disclosure.

As illustrated in these drawings, in the refrigerator according to an embodiment of the present disclosure, a seating module (600) for seating a capsule (1) and a beverage extraction module (700) for perforating the capsule (1) and gripping the capsule (1) during beverage extraction may be additionally provided to a refrigerator having a dispenser part (170), thereby enabling extraction of a capsule beverage.

The refrigerator having the seating module (600) and the beverage extraction module (700) according to the embodiment of the present disclosure will be described in more detail for each component.

First, the refrigerator according to the embodiment of the present disclosure may include a cabinet (110) forming an exterior of the refrigerator.

The cabinet (110) may be formed in a shape of a box having an open front surface.

A storage compartment (101) may be provided inside the cabinet (110). The storage compartment (101) may be a space in which items such as food, beverages, or other food products are stored. The storage compartment (101) may be configured to store, for a long time, the items stored in the space by using cold air generated by a refrigeration cycle.

Next, the refrigerator according to the embodiment of the present disclosure may include a door (150).

The open front surface of the main body may be opened and closed by the door. That is, the storage compartment (101) may be opened and closed by the door (150).

The door (150) may be provided with an ice maker (160) for making ice or an ice bank (not shown) in which ice is stored.

The door (150) may be provided as one door, or one door (150) may be provided for each storage compartment (101).

The door (150) may include a door body (151) and a front panel (152).

The door body (151) may be defined as a body portion of the door (150), and the front panel (152) may be defined as a front surface of the door (150).

An installation space may be provided in a front surface of the door body (151).

The installation space may be defined as a space spaced apart between the front surface and a rear surface of the door (150), or a space arbitrarily formed in the front surface of the door body (151) for installing various components.

Various components may be installed in the installation space.

For example, the dispenser part (170) may be provided in the installation space.

The dispenser part (170) may provide a space recessed from the front surface of the door (150) so that a cup can be seated, and a dispensing nozzle (171) to which drinking water is supplied may be provided on an upper surface of the space provided by the dispenser part (170). An ice passage (172) to which ice is supplied may be provided on the upper surface of the space provided by the dispenser part (170). The dispenser part (170) will be described again below.

In addition, the seating module (600), which will be described below, may be provided in the installation space.

The front panel (152) may be provided on the front surface of the door body (151). The front panel (152) may serve to block the installation space of the door body (151) and isolate the installation space from an external environment.

The front panel (152) may have a cutout hole (152a) opened such that an accommodation recess (611) of the seating module (600) and the dispenser part (170) are exposed to the outside.

An operation part (152b) may be provided on the front panel (152). The operation part (152b) may be a button or a touch panel operated to supply at least one of purified water, hot water, ice, and an extracted beverage that can be supplied to the dispenser part (170), which will be described below.

It is more preferable that a temperature of hot water or a pressure of hot water may also be adjusted by the operation part (152b).

In addition, the operation part (152b) may perform an operation for controlling operation of the refrigerator.

Next, the refrigerator according to the embodiment of the present disclosure may include the dispenser part (170).

The dispenser part (170) may be defined as a portion on which a cup or a container is seated in order to receive drinking water, ice, or an extracted beverage, or as a device or structure including the portion.

The dispenser part (170) may be provided to be exposed to an outer surface of the door (150) (a surface exposed to an indoor space). Accordingly, a user may receive drinking water or ice at the exterior side of the door (150) without opening the door (150).

The dispenser part (170) may be provided with the dispensing nozzle (171).

The dispensing nozzle (171) may receive drinking water from a raw water line (201) or receive drinking water from a connection tube (180) and supply the drinking water to the cup or container seated in the dispenser part (170). In this case, the raw water line (201) may be a tube, a pipe, or a hose connected to a water supply provided outside the refrigerator or to a container in which drinking water is stored. In addition, the raw water line (201) may be installed to be connected along the inside of the door (150) of the refrigerator to the dispenser part (170).

Although not shown, a filter device may be provided in the raw water line (201). By the filter device, water supplied to the raw water line (201) may become purified water suitable for drinking (purified water).

The connection tube (180) may be a tube connected to supply high-temperature drinking water passing through a seating tray (620) to the dispensing nozzle (171). In this case, one end of the connection tube (180) may be connected to the dispensing nozzle (171), and the other end of the connection tube (180) may be connected to a tray accommodation part (610).

Next, the refrigerator according to the embodiment of the present disclosure may include a hot water supply module (300).

The hot water supply module (300) may be a device for heating and supplying drinking water.

The hot water supply module (300) may be provided in at least one of the cabinet (110) and the door (150). For example, as illustrated in FIGS. 2 to 5, a mounting recess (151a) may be formed in the door body (151) forming the door (150), and the hot water supply module (300) may be mounted in the mounting recess (151a).

The mounting recess (151a) may be formed in an upper surface of the door body (151), and the hot water supply module (300) may be installed on the upper surface of the door (150). In particular, the hot water supply module (300) may be accommodated in the mounting recess (151a) and detachably mounted therein.

That is, the hot water supply module (300) may be selectively mounted in the door (150) of the refrigerator having the dispenser part (170) and connected to the dispenser part (170), thereby being able to supply hot water to the dispenser part (170). The mounting recess (151a) may be closed by a cover (154).

The hot water supply module (300) may be configured to receive and heat raw water passing through the raw water line (201). The raw water line (201) may be a tube, a pipe, or a hose connected to a water pipe or a container in which drinking water is stored. The raw water line (201) may be installed to extend along the inside of the door (150) of the refrigerator to the dispenser part (170).

Although not shown, the filter device may be provided in the raw water line (201). By the filter device, water supplied to the raw water line (201) may become purified water suitable for drinking (purified water).

As illustrated in FIGS. 6 to 10, the hot water supply module (300) may include a water pump (330) for pumping raw water and a heater (350) for heating the pumped raw water. That is, the hot water supply module (300) may be configured to pump, heat, and then discharge drinking water through a first guide line (310) and a second guide line (320) connected to the raw water line (201).

The first guide line (310) may be defined as a flow path provided to guide a flow of drinking water from a drinking water inlet through which drinking water is introduced into the hot water supply module (300) to a drinking water inflow side of the heater (350). In this case, the first guide line (310) and the raw water line (201) may be connected to each other by a branch line (202).

The second guide line (320) may be defined as a flow path provided to guide a flow of drinking water from the heater (350) until the drinking water is discharged to the outside of the hot water supply module (300). In this case, a supply tube (203) may be connected to a drinking water outflow side of the second guide line (320), and the drinking water may be discharged through the supply tube (203) to the outside of the hot water supply module (300).

Meanwhile, in the case of the supply tube (203), the longer the length thereof, the greater the amount of drinking water remaining therein. Accordingly, when supply of hot water is requested, drinking water remaining in the supply tube (203) (drinking water in a cooled state) may first be supplied, and then drinking water heated while passing through the hot water supply module (300) may be supplied. As a result, user dissatisfaction may be caused by the drinking water remaining in the supply tube (203).

To prevent this, the hot water supply module (300) may further include a water recovery part (303). The water recovery part (303) may be configured to recover and temporarily store residual water in the supply tube (203) after supply of hot water is performed. By this additional structure of the water recovery part (303), when a request for subsequent supply of hot water occurs, an operation of first heating and supplying the stored residual water and then heating and supplying new drinking water may be performed.

The water recovery part (303) may be configured such that drinking water flows along a third guide line (360) and is stored therein. In this case, the third guide line (360) may be connected to one portion of the second guide line (320) so as to branch therefrom.

The water recovery part (303) may include a storage part (380) for recovering and storing residual water in the supply tube (203) and the second guide line (320) through the third guide line (360).

It is preferable that a capacity of drinking water that can be stored in the storage part (380) is equal to or greater than at least a capacity of drinking water remaining in the supply tube (203) and the second guide line (320). That is, it is preferable that all of the drinking water remaining in the supply tube (203) and the second guide line (320) can be recovered to the storage part (380).

The storage part (380) may be configured in various manners.

As one example, as illustrated in FIGS. 6 to 8, the storage part (380) may be formed as a tube connected to the third guide line (360) or extending from the third guide line (360). That is, drinking water recovered from the second guide line (320) or the supply tube (203) may be stored in the tube-shaped storage part (380).

To this end, the tube-shaped storage part (380) may be formed to have a length longer than a length of the second guide line (320), may be formed to have a length longer than a length of the supply tube (203), or may be formed to have a length equal to or longer than a combined length of the second guide line (320) and the supply tube (203).

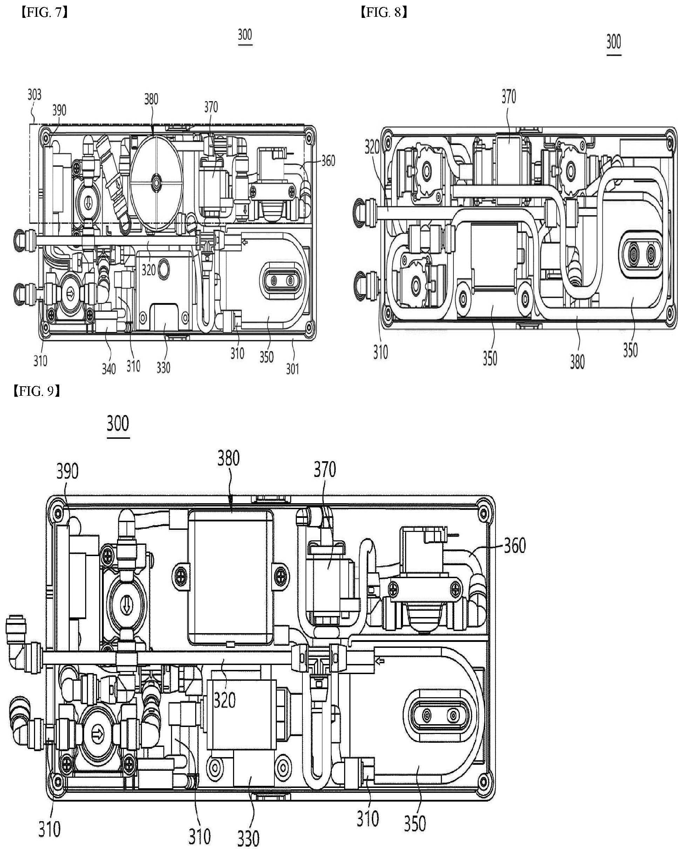

The tube-shaped storage part (380) may be formed to be wound at one portion inside the hot water supply module (300), as illustrated in FIGS. 6 and 7, or may be formed to extend along an empty space in the hot water supply module (300), as illustrated in FIG. 8.

As another example, as illustrated in FIG. 9, the storage part (380) may be formed in the shape of a box in which recovered water is stored. That is, the recovered water may be stored in the box-shaped storage part (380), and, upon use of hot water, the recovered water stored in the box-shaped storage part (380) may be discharged from the box-shaped storage part (380) and then reheated.

The box-shaped storage part (380) may be formed to have a size sufficient to store a set amount of recovered water. For example, a fluid storage capacity of the box-shaped storage part (380) may be greater than a storage capacity of the second guide line (320), greater than a storage capacity of the supply tube (203), or greater than a combined storage capacity of the second guide line (320) and the supply tube (203).

Meanwhile, the water recovery part (303) may further include a recovery pump (370). The recovery pump (370) may be operated to suction drinking water remaining in the supply tube (203) during a water recovery operation and recover the drinking water to the storage part (380).

In addition, the hot water supply module (300) may include a circuit board (390). A controller may be provided on the circuit board (390), and may control operations of respective valves, pumps (330, 370), and the heater (350) constituting the hot water supply module (300). In this case, the circuit board (390) may be connected to receive power or a control signal from the refrigerator via an electric wire connector (391).

That is, the hot water supply module (300) may operate under control of a control part that controls operation of the refrigerator, but may also be controlled independently, so that the hot water supply module (300) may be provided as a single module.

Next, the refrigerator according to the embodiment of the present disclosure may include the seating module (600).

The seating module (600) may be a device provided to mount a beverage capsule (1) at a correct position and to withdraw the beverage capsule (1) when extraction of a beverage is completed.

As illustrated in FIG. 3 and FIGS. 11 to 14, the seating module (600) may be manufactured as a module separate from the refrigerator and mounted in the refrigerator. For example, the seating module (600) may be provided as a module separate from the door body (151) or the beverage extraction module (700), and may be detachably mounted in the installation space provided by the door body (151). That is, the seating module (600) may be manufactured as a module separate from the refrigerator, so that the seating module (600) may be selectively installed in the refrigerator together with the beverage extraction module (700) according to a user's need or according to a model of the refrigerator, thereby providing a function of extracting a beverage from the beverage capsule (1).

The seating module (600) may include the tray accommodation part (610) having the accommodation recess (611).

The accommodation recess (611) may be defined as a portion in which the seating tray (620), which will be described below, is accommodated and mounted, and as a portion formed to be recessed from the front surface of the tray accommodation part (610).

The tray accommodation part (610) may be provided above the dispenser part (170). Accordingly, a beverage extracted in the accommodation recess (611) of the tray accommodation part (610) may be smoothly provided to the dispensing nozzle (171) of the dispenser part (170) through the connection tube (180) by a height difference without using a separate pump.

The tray accommodation part (610) may be detachably installed in the installation space of the door body (151). This structure of the tray accommodation part (610) may allow the seating tray (620) to be seated therein by additionally installing the tray accommodation part (610) in an existing refrigerator having a dispenser. That is, a structure capable of performing a capsule extraction function may be added even to a refrigerator having no capsule extraction function.

The seating module (600) may include the seating tray (620) for seating the capsule (1).

The seating tray (620) may be a component provided to position the capsule (1) (a beverage capsule) filled with a beverage in the accommodation recess (611) of the door (150).

The seating tray (620) may be installed to be accommodated in or withdrawn from the accommodation recess (611). Accordingly, a user may easily mount or withdraw the capsule (1) with respect to the seating tray (620), and may also smoothly perform cleaning of the seating tray (620).

A coupling structure between the seating tray (620) and the accommodation recess (611) may be formed in various manners.

As one example, although not shown, one end of the seating tray (620) may be rotatably installed in the tray accommodation part (610), the door body (151), or the front panel (152). That is, the seating tray (620) may be installed to be mounted in the accommodation recess (611) or separated from the accommodation recess (611) by a rotation (swinging or tilting) operation.

As another example, as in the structure of the embodiment of the present disclosure, the seating tray (620) may be installed to be mounted in or separated from the accommodation recess (611) in a drawer-type manner.

To this end, as illustrated in the accompanying FIGS. 15 and 16, guide grooves (612) may be formed to be recessed in opposite side walls inside the accommodation recess (611), and guide protrusions (622) accommodated in and guided by the guide grooves (612) may be formed on opposite side surfaces of the seating tray (620).

The guide grooves (612) and the guide protrusions (622) may also serve to prevent the seating tray (620) from being tilted when the seating tray (620) is mounted in the accommodation recess (611).

Meanwhile, the seating tray (620) is required to be placed at a correct position in the accommodation recess (611). That is, as the seating tray (620) is placed at the correct position, the capsule (1) may also be placed at a correct position, and thus perforation of the capsule (1) and extraction of a capsule beverage by the beverage extraction module (700), which will be described below, may be smoothly performed.

To this end, the seating tray (620) may be designed to be placed at the correct position when the seating tray (620) is completely inserted into the accommodation recess (611).

In particular, magnetic members (630) attached to each other may be respectively provided on facing surfaces between the guide protrusions (622) of the seating tray (620) and the guide grooves (612) so that the seating tray (620) can be completely inserted into the accommodation recess (611). That is, by attachment between the magnetic members (630), the seating tray (620) may be completely inserted into the accommodation recess (611) and maintained at the corresponding position. Although not shown, a restoring member (not shown) having elasticity may be provided between facing surfaces between the seating tray (620) and the accommodation recess (611) so as to push the seating tray (620) in a process of withdrawing the seating tray (620) from the accommodation recess (611).

As illustrated in FIGS. 17 and 18, the seating tray (620) may include a cup part (621) having a seating recess (621a) so that the capsule (1) is seated therein, and a cover part (623) configured to close a front surface of the accommodation recess (611) when the cup part (621) is completely accommodated in the accommodation recess (611). The capsule (1) may be accommodated and mounted into the seating recess (621a) from above the seating recess (621a) of the cup part (621).

The seating recess (621a) of the cup part (621) may be formed to have a space larger than the capsule (1). Accordingly, the capsule (1) may be easily provided in the seating recess (621a), and a gripping cap (710) of the beverage extraction module (700), which will be described below, may accurately grip an outer surface of the capsule (1) while being inserted into the seating recess (621a).

In addition, a discharge tube (621b) for discharging an extracted beverage flowing down into the seating recess (621a) may be formed to protrude from a lower surface of the cup part (621). Accordingly, the dispensing nozzle (171) of the dispenser part (170) may receive a beverage or drinking water discharged through the discharge tube (621b).

A bottom surface in the seating recess (621a) may be formed to be inclined up to a portion extending to the discharge tube (621b). Accordingly, a beverage flowing down to a lower space (a space between a bottom surface of the support and the bottom surface in the seating recess) in the seating recess (621a) may be smoothly discharged through the discharge tube (621b).

In addition, a support (624) may be provided in the seating recess (621a) formed in the cup part (621).

The support (624) may be defined as a portion on which the capsule (1) is placed such that movement of the capsule (1) is prevented. That is, the capsule (1) may be placed on the upper surface of the support (624). In this case, the capsule (1) may be provided such that a portion sealed by a film (1a) is placed on the upper surface of the support (624).

A rupture protrusion (624a) may be formed to protrude from the upper surface of the support (624). The rupture protrusion (624a) may be provided to rupture the film (1a) of the capsule (1) placed on the upper surface of the support (624). The rupture protrusion (624a) may be formed to have a structure that becomes sharper toward an upper side.

In addition, multiple extraction holes (624b) passing through the support (624) vertically may be formed in the support (624). The extraction holes (624b) may be provided to guide an extracted beverage flowing out from within the capsule (1) so that the extracted beverage can flow down to the bottom surface in the seating recess (621a).

To this end, the bottom surface of the support (624) and the bottom surface in the seating recess (621a) may be formed to be spaced apart from each other so as to provide a space through which the beverage can flow.

It is preferable that the support (624) is formed so as not to rotate leftward and rightward in a state in which the support (624) is seated in the seating recess (621a).

As one example, although not shown, at least a portion of an inner surface of the seating recess (621a) and an outer surface of the support (624) may be formed as flat surfaces engaged with each other.

As another example, although not shown, protrusions and grooves engaged with each other may be formed on the inner surface of the seating recess (621a) and the outer surface of the support (624).

A handle (623a) may be formed on the cover part (623) constituting the seating tray (620). That is, a user may perform an operation to withdraw the seating tray (620) from the accommodation recess (611) while gripping the handle (623a). As in the drawings of the embodiment, the handle (623a) may be formed to protrude forward from the cover part (623). Although not shown, the handle (623a) may be configured in various manners, such as being formed as a groove or being formed as a protrusion having another structure.

Meanwhile, the accommodation recess (611) may be provided with a guide part (613) for guiding an extracted beverage discharged through the discharge tube (621b) to the dispensing nozzle (171) of the dispenser part (170).

That is, the extracted beverage may be provided to the dispensing nozzle under guidance of the guide part (613).

The guide part (613) may be implemented in various forms.

For example, as illustrated in FIGS. 17 and 18 shown as the embodiment, the guide part (613) may be formed such that the discharge tube (621b) of the seating tray (620) is coupled to the guide part (613) and the connection tube (180) connected to the dispensing nozzle (171) is coupled to the guide part (613).

To this end, the guide part (613) may include an insertion groove (613a) to which the discharge tube (621a) is coupled, and a discharge pipe (613b) that transfers a beverage guided to the insertion groove (613a) to the connection tube (180).

The insertion groove (613a) may be formed in an inner wall surface of the accommodation recess (611) and may be formed such that the discharge tube (621a) is inserted and coupled thereto.

In particular, the insertion groove (613a) may be formed in a rear wall surface inside the accommodation recess (611), and the discharge tube (621a) may be formed to be bent toward the rear side in which the insertion groove (613a) is formed. That is, the insertion groove (613a) and the discharge tube (621a) may be engaged with and coupled to each other in a direction in which the seating tray (620) is inserted into the accommodation recess (611). Accordingly, through the process of inserting the seating tray (620) into the accommodation recess (611), the discharge tube (621a) may be inserted into and coupled to the insertion groove (613a).

The discharge pipe (613b) may protrude from an outer wall surface of the tray accommodation part (610) in which the accommodation recess (611) is formed, and communicate with the insertion groove (613a). Accordingly, an extracted beverage may be discharged to the connection tube (180) connected to the discharge pipe (613b).

In another embodiment of the guide part (613), as illustrated in FIG. 19, a through hole (611a) may be formed in the inner wall surface of the accommodation recess (611), and the discharge tube (621b) may pass through the through hole (611a) and be connected to the connection tube (180). In this case, a hose connector (181) to which the connection tube (180) is connected may be provided on the outer wall surface of the accommodation recess (611) (the outer wall surface of the tray accommodation part) so that the discharge tube (621b) and the connection tube (180) can be easily coupled. In this case, the discharge tube (621b) passing through the through hole (611a) may be coupled to the hose connector (181) and connected to the connection tube (180).

Next, the refrigerator according to the embodiment of the present disclosure may include the beverage extraction module (700).

The beverage extraction module (700) may be defined as a device for perforating and gripping the capsule (1) in order to extract a beverage from the capsule (1) accommodated in the seating tray (620), in a state in which the seating tray (620) is seated in the accommodation recess (611) of the door (150).

That is, the beverage extraction module (700) may be a device provided to automatically perforate the capsule (1) seated in the seating tray (620) and inject heated drinking water into the perforated portion, thereby extracting the beverage from the capsule (1).

As illustrated in FIGS. 12 to 14, the beverage extraction module (700) may be manufactured as a module separate from the refrigerator and mounted in the refrigerator. For example, the beverage extraction module (700) may be provided as a module separate from the door body (151) or the seating module (600), and may be detachably mounted in the installation space provided by the door body (151). That is, the beverage extraction module (700) may be manufactured as a module separate from the refrigerator, so that the beverage extraction module (700) may be selectively installed in the refrigerator together with the seating module (600) according to a user's need or according to a model of the refrigerator, thereby providing a function of extracting a beverage from the beverage capsule (1).

The beverage extraction module (700) may be installed in an installation casing (701). More specifically, the installation casing (701) for installing the beverage extraction module (700) may be provided in the installation space, and the beverage extraction module (700) may be installed in the installation casing (701).

The installation casing (701) may serve to support the beverage extraction module (700) so that the beverage extraction module (700) is installed at a correct position. In addition, the installation casing (701) may serve to block occurrence of operational interference of the beverage extraction module (700) from other components provided in the installation space of the door (150).

That is, by additionally providing the installation casing (701), the beverage extraction module (700) may be installed even in a door of an existing refrigerator (a door of a refrigerator having no function of extracting a capsule beverage).

The installation casing (701) may be formed as a box-shaped structure open forward. In this case, the open front surface of the installation casing (701) may be covered and closed by the front panel (152) forming the door (150).

In addition, a bottom surface of the installation casing (701) may be positioned directly above the accommodation recess (611). In this case, the bottom surface of the installation casing (701) and an upper surface of the accommodation recess (611) are formed to be opened so as to communicate with each other.

Next, each component of the beverage extraction module (700) will be described with reference to FIGS. 12 to 15, 20, and 21.

The beverage extraction module (700) may be provided as a modularized assembly including at least one of the following components.

First, the beverage extraction module (700) may include the gripping cap (710) for perforating the capsule (1) seated in the seating tray (620).

The gripping cap (710) may be installed to be movable up and down toward the capsule (1), and may be formed to surround and grip an outer surface of the capsule (1) seated in the seating tray (620).

The gripping cap (710) may be positioned directly above the accommodation recess (611) in the installation casing (701) provided in the installation space of the door body (151), and may be formed to have a capsule receiving recess (711) open toward the capsule (1). The capsule receiving recess (711) may be formed to be recessed from the lower surface of the gripping cap (710).

Meanwhile, a perforation protrusion (712) may be formed on an inner surface of the gripping cap (710) so as to perforate the outer surface of the capsule (1). In this case, the perforation protrusion (712) may be fixed to an upper inner surface of the capsule receiving recess (711), and may perforate an upper end of the capsule (1) by downward movement of the gripping cap (710).

In addition, an inlet pipe (713) may be formed to protrude from an outer surface of the gripping cap (710). The inlet pipe (713) may be formed to communicate with the capsule receiving recess (711) in the gripping cap (710). In this case, the inlet pipe (713) may be connected to the supply tube (203) that supplies drinking water heated by the hot water supply module (300). It is preferable that the supply tube (203) is formed as a flexible tube so as to correspond to up-and-down movement of the gripping cap (710).

In addition, the beverage extraction module (700) may include an elevating part (720) for moving the gripping cap (710) up and down.

The elevating part (720) may be configured to move the gripping cap (710) up and down by automatic operation.

To this end, the elevating part (720) may include a pressing bar (721) connected to the upper surface of the gripping cap (710). That is, the gripping cap (710) may be moved up and down by the up-and-down movement of the pressing bar (721), and the capsule receiving recess (711) of the gripping cap (710) may surround and press the outer surface of the capsule (1) by downward movement of the gripping cap (710).

The pressing bar (721) may be provided as one pressing bar or a plurality of pressing bars, and may be formed as a bar having one end coupled to the upper surface of the gripping cap (710) and extending upward from the gripping cap (710).

In addition, the elevating part (720) may include a rack member (722) connected to the pressing bar (721). That is, the pressing bar (721) may be moved up and down by up-and-down movement of the rack member (722). In this case, the rack member (722) may be formed as a bar having an elongated structure in an up-down direction, and may have a gear formed on one side wall surface perpendicular to a longitudinal direction.

The elevating part (720) may include a pinion gear (723) and a driving source (724) for moving the rack member (722) up and down. In this case, the pinion gear (723) may be engaged with the gear formed on one side wall surface of the rack member (722), and the driving source (724) may be installed to rotate the pinion gear (723).

That is, the pinion gear (723) may be rotated by operation of the driving source (724), so that the rack member (722) engaged perpendicular thereto may be moved up and down. In this case, the driving source (724) may be a motor.

The driving source (724) may be configured to operate when the seating tray (620) is completely accommodated in the accommodation recess (611), thereby moving the gripping cap (710) downward. To this end, a detection sensor (640) configured to detect that the seating tray (620) is completely accommodated may be provided in the accommodation recess (611). For example, the detection sensor (640) may be configured as a Hall sensor that detects proximity of the magnetic members (630) provided in the seating tray (620). The Hall sensor may be positioned at a lower portion of the insertion groove (613a) among the opposite side walls of the accommodation recess (611).

The rack member (722) may be operated to move upward until the gripping cap (710) is placed at a position out of the accommodation recess (611), and to move downward until the gripping cap (710) reaches a degree at which the gripping cap (710) can perforate and grip the capsule (1) of the seating tray (620).

The beverage extraction module (700) may include a module cover (702) in which the rack member (722), the pinion gear (723), and the driving source (724) can be accommodated. Accordingly, the beverage extraction module (700) may be provided such that the gripping cap (710) and the elevating part (720) form a single module.

The module cover (702) may be fixedly installed in the installation casing (701) provided in the installation space of the door body (151).

Meanwhile, the rack member (722) may be installed in the module cover (702) so as to move up and down without shaking. To this end, a contact member (722a) for preventing shaking of the rack member (722) while contacting an inner wall surface of the module cover (702) may be provided on another side wall surface perpendicular to a longitudinal direction of the rack member (722). In this case, the contact member (722a) may be formed as a roller.

Hereinafter, a process of extracting a capsule beverage in the refrigerator according to the embodiment of the present disclosure described above will be described in detail.

First, in order to extract a capsule beverage, the seating tray (620) may be separated from the accommodation recess (611) provided in the door (150) of the refrigerator, and then the capsule (1) may be seated in the seating recess (621a) of the cup part (621) constituting the seating tray (620). In this case, the capsule (1) may be seated in the seating recess (621a) such that a portion of the capsule (1) covered with the film (1a) (see FIG. 12) faces downward. Accordingly, the film (1a) of the capsule (1) may be placed on the upper surface of the support (624) provided in the seating recess (621a).

Then, the seating tray (620) in which the capsule (1) is seated may be mounted in the accommodation recess (611) provided in the door (150).

When the seating tray (620) is mounted, as illustrated in FIGS. 15 and 16, the seating tray (620) may be accommodated while the guide protrusions (622) formed on opposite side surfaces thereof are guided by the guide grooves (612) formed in the opposite side walls inside the accommodation recess (611). In particular, when the cup part (621) of the seating tray (620) is completely inserted into the accommodation recess (611), the magnetic members (630) provided on facing surfaces of the guide protrusions (622) and the guide grooves (612) may be attached to each other. Accordingly, the seating tray (620) may be maintained in a state of being completely mounted in the accommodation recess (611), and the capsule (1) may be maintained in a state of being placed at a correct position in the accommodation recess (611).

In addition, as illustrated in FIGS. 17 and 18, while the seating tray (620) is mounted in the accommodation recess (611), the discharge tube (621b) formed in the seating tray (620) may be inserted into and coupled to the insertion groove (613a) formed in the accommodation recess (611). Accordingly, the discharge pipe (613b) provided in the accommodation recess (611) may receive a beverage discharged from the discharge tube (621b) through the insertion groove (613a).

When the seating tray (620) is completely mounted in the accommodation recess (611), the detection sensor (640) may detect this, and it may be determined that beverage extraction is possible.

Thereafter, when operation of the operation part (152b) by a user occurs, the driving source (724) of the beverage extraction module (700) may be operated. Of course, the driving source (724) may be controlled to operate when detection of the seating tray (620) by the detection sensor (640) is performed.

When the driving source (724) is operated, the pinion gear (723) coupled thereto so as to enable power transmission may be rotated, and the rack member (722) engaged with the pinion gear (723) may move downward and move the gripping cap (710) downward.

Accordingly, the gripping cap (710) may gradually move downward into the accommodation recess (611), and the capsule (1) may gradually be accommodated in the capsule receiving recess (711) of the gripping cap (710).

When the capsule (1) is completely accommodated in the capsule receiving recess (711) by the downward movement of the gripping cap (710), the outer surface of the capsule (1) may be perforated by the perforation protrusion (712) positioned in the capsule receiving recess (711), and the film (1a) of the capsule (1) may be perforated by the rupture protrusion (624a) formed on the support (624). When the outer surface and the film (1a) of the capsule (1) are perforated, the driving source (724) may be stopped. This is illustrated in FIG. 21.

When a request for beverage extraction by a user occurs in a state in which the capsule (1) is perforated, the hot water supply module (300) may be operated and heat drinking water. That is, when operation of the operation part (152b) requesting beverage extraction by the user occurs, operation control of the hot water supply module (300) for heating drinking water may be performed.

When operation control of the hot water supply module (300) is performed, drinking water in the raw water line (201) may be provided into the hot water supply module (300) through the branch line (202) by operation of the water pump (330), and may then be heated while passing through the heater (350). In this case, the heated drinking water may be provided to have a set pressure and a set temperature by control of the heater (350) and control of the water pump (330). This is illustrated in the circuit diagram of FIG. 22.

Subsequently, the heated drinking water may be transferred to the inlet pipe of the gripping cap through the supply tube (203), and may then be supplied into the gripping cap (710).

The drinking water supplied into the gripping cap (710) may pass through the capsule (1) positioned in the gripping cap (710), thereby extracting the beverage in the capsule (1) at a high temperature and a high pressure.

The beverage extracted from the capsule (1) may pass through each of the extraction holes (624b) of the support (624), and flow down to a lower portion in the seating recess (621a) of the seating tray (620).

Subsequently, the beverage may be discharged to the discharge pipe (613b) through the discharge tube (621b) formed on the bottom surface of the seating recess (621a), and be provided to the dispensing nozzle (171) of the dispenser part (170) through the connection tube (180) connected to the discharge pipe (613b).

Accordingly, the beverage may be supplied to a cup placed in the dispenser part (170) through the dispensing nozzle (171). During the process of heating the drinking water and extracting the beverage, the drinking water flows as illustrated in the circuit diagram of FIG. 22.

Meanwhile, when extraction of the beverage is completed, operation of the hot water supply module (300) may be stopped.

In addition, when extraction of the beverage is completed, the driving source (724) may be operated and the gripping cap (710) may be moved upward. The gripping cap (710) may be raised until the gripping cap (710) reaches a position completely out of the accommodation recess (611). That is, the gripping cap (710) may be moved upward to a position at which the gripping cap (710) does not interfere with withdrawal of the seating tray (620) from the accommodation recess (611).

Thereafter, a user may withdraw the seating tray (620) from the accommodation recess (611), and then remove the capsule (1) therein. The seating tray (620) from which removal of the capsule (1) is completed may be inserted back into the accommodation recess (611) and stored therein.

After the beverage extraction is completed, the hot water supply module (300) may perform a water recovery operation for recovering residual water remaining in the supply tube (203).

The water recovery operation may be performed by operation of the recovery pump (370). In this case, inflow of drinking water from the raw water line (201) through the branch line (202) may be controlled to be blocked.

By operation of the recovery pump (370), residual water remaining in the supply tube (203) may be recovered to the second guide line (320), and then flow along the third guide line (360) and be stored in the storage part (380). This is illustrated in the circuit diagram of FIG. 23.

The recovery pump (370) may be stopped when the water recovery operation is ended.

When a request for hot water supply by operation of the operation part (152a) occurs in a state in which the water recovery operation is ended, a reheating operation may be performed.

During the reheating operation, drinking water recovered to the storage part (380) may be controlled to be provided to the heater (350) through the water pump (330), heated, and then discharged to the supply tube (203) under guidance of the second guide line (320). This is illustrated in the circuit diagram of FIG. 24.

Accordingly, through the water recovery operation and the reheating operation described above, a phenomenon in which cooled drinking water remaining in the supply tube is supplied may be prevented.

As described above, in the refrigerator of the present disclosure, a beverage in the capsule (1) may be automatically extracted only by a simple operation in which a user seats the capsule (1) in the seating tray (620) and mounts the seating tray (620) in the accommodation recess (611) provided in the door (150).

In addition, the refrigerator of the present disclosure has an advantage in that because the tray accommodation part (610) for mounting the seating tray (620) in which the capsule (1) is seated and the beverage extraction module (700) for gripping and perforating the capsule (1) are each provided as a single module, the tray accommodation part (610) and the beverage extraction module (700) may be applied even to an existing refrigerator.

In addition, in the refrigerator of the present disclosure, because the discharge tube (621b) of the seating tray (620) is coupled to the insertion groove (613a) provided in the accommodation recess (611) in a process of mounting the seating tray (620) in the accommodation recess (611) of the door (150), an extracted beverage may be accurately guided to the dispensing nozzle (171) through the connection tube (180).

Meanwhile, the refrigerator of the present disclosure may be implemented in various forms in addition to the above-described embodiments.

For example, the hot water supply module (300) may be installed at a portion other than the upper surface of the door (150).

As one example, the hot water supply module (300) may be installed on the upper surface of the cabinet (110) of the refrigerator. That is, considering that the control part provided with various circuits for controlling the entire refrigerator is provided on the upper surface of the cabinet (110), the hot water supply module (300) may also be disposed in a structure for storing the control part.

As another example, the hot water supply module (300) may be installed on the inner wall surface of the door (150) on a storage compartment side. For example, as illustrated in FIGS. 25 and 26, a mounting recess (155) for accommodating the hot water supply module (300) may be formed in a portion of the inner wall surface of the door (150), and the hot water supply module (300) may be mounted in the mounting recess (155).

In this case, it is preferable that a heat insulating member (156) is provided at an inlet of the mounting recess (155) so that heat generated by operation of the hot water supply module (300) does not affect items in the storage compartment.

In addition, a cover (157) configured to selectively open and close the opening of the mounting recess (155) may be provided at the opening of the mounting recess (155).

As still another example, the hot water supply module (300) may not be provided. That is, although not shown, when the corresponding refrigerator is manufactured to include a hot water supply device for supplying hot water, the hot water supply device may be used instead of the hot water supply module (300).

Meanwhile, the elevating part (720) for moving the gripping cap (710) up and down may be configured to move the gripping cap (710) up and down by manual operation.

For example, although not shown, a handle (not shown) exposed to the front surface of the door (150) may be formed on the front surface of the gripping cap (710), and the gripping cap (710) may be configured to be moved up and down by an up-and-down operation of the handle.

Meanwhile, in the above-described embodiment of the present disclosure, the hot water supply module (300), the seating tray (620), and the beverage extraction module (700) constituting the refrigerator of the present disclosure may each be formed as separate modules and mounted in the door (150).

However, in the refrigerator of the present disclosure, at least two devices among the hot water supply module (300), the seating tray (620), and the beverage extraction module (700) may be formed as one module and mounted in the door (150).

In addition, in the refrigerator of the present disclosure, the hot water supply module (300), the seating tray (620), and the beverage extraction module (700) may be formed as a single module and mounted in the door (150).

As such, the refrigerator of the present disclosure may be implemented in various forms.

As described above, although all the components constituting the embodiment according to the present disclosure have been described as being combined into a single unit or operating in combination, the present disclosure is not necessarily limited to such embodiments. That is, within the scope and spirit of the present disclosure, all the components may operate by being selectively combined into one or more units. In addition, the terms "include," "comprise," or "have," as used herein, unless otherwise specifically stated, imply that the relevant component may be present, and therefore should be construed to include other components rather than to exclude other components. All terms, including technical or scientific terms, unless otherwise defined, have the same meaning as commonly understood by those skilled in the art to which the present disclosure belongs. Commonly used terms, such as terms defined in the dictionary, should be interpreted to be consistent with their contextual meanings in the relevant technology and should not be interpreted in an idealized or overly formal sense unless expressly defined in the present disclosure.

The foregoing description is merely illustrative of the technical idea of the present disclosure, and it will be understood by those skilled in the art that various modifications and variations may be made without departing from the essential characteristics of the present disclosure. Accordingly, the embodiments disclosed herein are not intended to limit the technical idea of the present disclosure, but rather to explain it, and the scope of the technical idea of the present disclosure is not limited by such embodiments. The scope of protection of the present disclosure shall be interpreted on the basis of the following claims, and all technical ideas falling within the equivalent scope thereof shall be construed as being included within the scope of rights of the present disclosure.

## Claims

1. A refrigerator comprising:
a cabinet having a storage compartment provided therein;
a door configured to open and close the storage compartment;
a dispenser part provided in the door and having a dispensing nozzle configured to discharge drinking water;
a seating module provided in the door and including a seating tray having a seating recess in which a beverage capsule is seated, and a tray accommodation part having an accommodation recess in which the seating tray is accommodated; and
a beverage extraction module configured to perforate the beverage capsule seated in the seating tray and inject drinking water into the beverage capsule in order to extract a beverage from the beverage capsule.

2. The refrigerator of claim 1, wherein the seating tray is mounted in the accommodation recess of the tray accommodation part in a drawer-type manner.

3. The refrigerator of claim 1, wherein guide grooves are formed to be recessed in opposite side walls inside the accommodation recess, and guide protrusions accommodated in the guide grooves and guided for movement are formed on opposite side surfaces of the seating tray.

4. The refrigerator of claim 3, wherein magnetic members attached to each other are respectively provided on facing surfaces between the guide protrusions of the seating tray and the guide grooves.

5. The refrigerator of claim 1, wherein a support on which the beverage capsule is seated is provided inside the seating recess.

6. The refrigerator of claim 5, wherein the support includes:
a rupture protrusion formed by protruding therefrom so as to rupture a film of the beverage capsule; and
multiple extraction holes formed by penetrating the support so that an extracted beverage flowing out from within the beverage capsule flows down.

7. The refrigerator of claim 1, wherein a discharge tube for discharging an extracted beverage flowing down into the seating recess is formed to protrude from a lower surface of the seating tray.

8. The refrigerator of claim 7, wherein a bottom surface of the seating recess is formed to be inclined up to a portion extending to the discharge tube.

9. The refrigerator of claim 7, wherein the discharge tube is formed to be bent toward an inner wall surface of the accommodation recess, and
a guide part coupled to the discharge tube and configured to guide an extracted beverage to the dispensing nozzle of the dispenser part is provided in the accommodation recess.

10. The refrigerator of claim 9, wherein the guide part includes:
an insertion groove formed in the inner wall surface of the accommodation recess such that the discharge tube is inserted into and coupled to the insertion groove and the extracted beverage is discharged into the insertion groove;
a discharge pipe formed to protrude from an outer wall surface of the accommodation recess and configured to discharge the extracted beverage discharged into the insertion groove; and
a connection tube connecting the discharge pipe and the dispensing nozzle of the dispenser part.

11. The refrigerator of claim 1, wherein the door includes:
a door body having an installation space open forward at a portion of a front surface thereof;
and
a front panel installed to form the front surface of the door body and cover the open installation space.

12. The refrigerator of claim 1, further comprising:
a hot water supply module configured to receive drinking water from a raw water line, heat the drinking water to a set temperature, and then supply the drinking water at a set pressure,
wherein the hot water supply module is detachably installed in the door.

13. The refrigerator of claim 1, wherein the beverage extraction module includes:
a gripping cap configured to surround and grip an outer surface of the beverage capsule seated in the seating tray and having a perforation protrusion formed to perforate the outer surface of the beverage capsule; and
an elevating part configured to move the gripping cap up and down.

14. The refrigerator of claim 13, wherein a capsule receiving recess is formed in the gripping cap so as to surround the outer surface of the beverage capsule, and
an inlet pipe to which a supply tube for receiving drinking water is connected is formed to protrude from an outer surface of the gripping cap.

15. The refrigerator of claim 13, wherein the gripping cap is installed to be vertically movable, and
the perforation protrusion is formed to protrude downward from an upper inner surface of the capsule receiving recess.

16. The refrigerator of claim 13, wherein the elevating part includes:
a pressing bar connected to an upper surface of the gripping cap;
a rack member configured to move the pressing bar up and down; and
a driving source configured to provide a driving force for moving the rack member up and down.

17. The refrigerator of claim 16, wherein the beverage extraction module includes a module cover that accommodates the rack member, guides the up-and-down movement of the rack member, and is fixedly installed in the door.

18. The refrigerator of claim 1, wherein at least one of the seating module and the beverage extraction module is formed as a module separate from the door and is detachably mounted in the door.

19. A refrigerator comprising:
a cabinet having a storage compartment provided therein;
a door configured to open and close the storage compartment;
a dispenser part provided in the door and having a dispensing nozzle to which drinking water is supplied;
a seating module provided in the door and including a seating tray having a seating recess in which a beverage capsule is seated, and a tray accommodation part having an accommodation recess in which the seating tray is accommodated;
a hot water supply module provided in the door and configured to receive drinking water from a raw water line, heat the drinking water, and supply the drinking water into the accommodation recess; and
a beverage extraction module having a gripping cap configured to perforate the beverage capsule seated in the seating tray and receive heated drinking water from the hot water supply module, and an elevating part configured to move the gripping cap up and down,
wherein a discharge tube for discharging a beverage extracted from the beverage capsule or drinking water passing through the seating recess is formed in the seating tray, and
wherein the discharge tube provides the extracted beverage to the dispensing nozzle of the dispenser part through a connection tube.

20. The refrigerator of claim 19, wherein an insertion groove is formed in an inner wall surface of the accommodation recess such that the discharge tube is inserted into and coupled to the insertion groove and the extracted beverage is discharged into the insertion groove, and
a discharge pipe through which the extracted beverage discharged into the insertion groove is discharged is formed to protrude from an outer wall surface of the accommodation recess and is connected to the connection tube.
